# EUROPEAN PATENT APPLICATION

(11) **EP 3 578 891 A1**
(43) Date of publication of application: **11.12.2019**
(21) Application number: 17914436.5
(22) Date of filing: 20.10.2017
(51) Int. Cl.: F24F 11/00, F24F 11/32

(54) **AIR CONDITIONER, CONTROL METHOD AND APPARATUS THEREFOR, AND COMPUTER-READABLE STORAGE MEDIUM**

(30) Priority: 21.06.2017 CN 201710476975
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: WAN, Yongqiang, Guangdong 528311 (CN); XU, Yongfeng, Guangdong 528311 (CN); XIONG, Meibing, Guangdong 528311 (CN); LI, Bo, Guangdong 528311 (CN); SHU, Wentao, Guangdong 528311 (CN); QIAN, Xiaolong, Guangdong 528311 (CN); CHEN, Rufeng, Guangdong 528311 (CN)
(74) Representative: Lam, Alvin
(86) International application number: PCT/CN2017/107042
(87) International publication number: WO 2018/233160

(57) **Abstract**

A method for controlling an air conditioner, wherein an indoor environment temperature is detected by an indoor temperature sensor, and the control method comprises the following steps: during the operation of an air conditioner, if it is determined that an indoor temperature sensor has a fault, controlling the air conditioner such that same sends indoor temperature sensor failure alarm information, and determining whether an indoor machine of the air conditioner is connected to a control terminal (S1); if the indoor machine is connected to only one control terminal, acquiring a current indoor environment temperature by the control terminal (S2); and using the current indoor environment temperature acquired by the control terminal as a control parameter to control the air conditioner so as to keep the air conditioner operating continuously (S3). By the method, when a temperature sensor of an indoor machine has a fault, an air conditioner can acquire a substitute value for an indoor environment temperature while giving a failure alarm, such that an indoor air conditioner maintains subsequent operation and the user experience is improved. Further disclosed are a computer-readable storage medium, an air conditioner and a control apparatus therefor.

## Description

### CROSS-REFERENCE TO RELATED APPLICATIONS

The present application is based on and claims priority to Chinese patent application No. 201710476975.5, filed on June 21, 2017, the entire disclosure of which is hereby incorporated by reference.

### TECHNICAL FIELD

The present disclosure relates to the field of air conditioner technology, and in particular, to a control method of an air conditioner, a computer readable storage medium, a control apparatus of an air conditioner, and an air conditioner having the same.

### BACKGROUND

In the related art, an air conditioner usually has a plurality of sensors, such as a return air temperature sensor and a coil temperature sensor for an indoor machine, an environment temperature sensor, a coil temperature sensor, and a compressor temperature sensor for an outdoor unit. The usage of more temperature sensors leads to higher probability of failure, such as temperature sensor short-circuit, break-circuit, temperature drift and other faults.

In the related art, after the temperature sensor has a fault, the malfunctioning machine cannot be turned on to run again until the fault is removed. However, its problem is that once the temperature sensor has a fault, the user experience will be greatly reduced.

### SUMMARY

The present disclosure aims to solve at least one of the technical problems in the related art to some extent. Accordingly, a first objective of the present disclosure is to propose a control method of an air conditioner that can ensure that the indoor machine maintains normal operation in the event of a failure of the temperature sensor.

A second objective of the present disclosure is to propose a computer readable storage medium. A third objective of the present disclosure is to propose a control apparatus of an air conditioner. A fourth objective of the present disclosure is to propose an air conditioner.

In order to achieve above objectives, an embodiment of the first aspect of the present disclosure proposes a control method of an air conditioner. The indoor environment temperature is detected by an indoor temperature sensor, and the control method includes: durin operation of the air conditioner, if it is determined that the indoor temperature sensor has a fault, controlling the air conditioner to send indoor temperature sensor failure alarm information, and determining whether an indoor machine of the air conditioner is connected to a control terminal; when the indoor machine is connected to only one control terminal, acquiring a current indoor environment temperature by the control terminal; and controlling the air conditioner by using the current indoor environment temperature acquired by the control terminal as a control parameter to keep the air conditioner operating continuously.

According to the control method of the air conditioner proposed by the embodiment of the present disclosure, during the operation of the air conditioner, the indoor environment temperature is detected by an indoor temperature sensor, and if it is determined that the indoor temperature sensor has a fault, the air conditioner is controlled to send indoor temperature sensor failure alarm information, and it is further determined whether the indoor machine of the air conditioner is connected to a control terminal, and if the indoor machine is connected to only one control terminal, the current indoor environment temperature is acquired by the control terminal, and the air conditioner is controlled by using the current indoor environment temperature acquired by the control terminal as the control parameter, to keep the air conditioner operating continuously. Therefore, when the indoor machine temperature sensor has a fault, the air conditioner can acquire a substitute value of the indoor environment temperature while issuing a fault alarm, ensuring that the air conditioner maintains subsequent operation and improving the user experience.

According to an embodiment of the present disclosure, when the indoor machine is connected to multiple control terminals, the current indoor environment temperature is acquired by each control terminal, and the current indoor environment temperature acquired by one of the multiple control terminals is used as the control parameter according to a priority order of each control terminal.

According to an embodiment of the present disclosure, when the indoor machine is connected to multiple control terminals, the current indoor environment temperature is acquired by each control terminal, a weight of each control terminal is acquired, and the control parameter is acquired according to the current indoor environment temperature acquired by each control terminal and the weight of the corresponding control terminal.

According to an embodiment of the present disclosure, determining that the indoor temperature sensor has a fault includes: acquiring the indoor environment temperature detected by the indoor temperature sensor every preset period, and acquiring maximum and minimum values of the indoor environment temperature within N preset periods, where N is an integer greater than or equal to 2; determining whether a difference between the maximum value and the minimum value is greater than or equal to a preset temperature difference; and when the difference between the maximum value and the minimum value is greater than or equal to the preset temperature difference, determining that the indoor temperature sensor has a fault.

According to an embodiment of the present disclosure, the method further includes: after controlling the air conditioner to continuously operate with the control parameter for a first preset time, continuing to determine whether the indoor temperature sensor has a fault.

In order to achieve above objectives, an embodiment of the second aspect of the present disclosure proposes a computer readable storage medium having instructions stored therein, which when executed, cause the air conditioner to execute said control method of the air conditioner.

According to the computer readable storage medium proposed by the embodiment of the present disclosure, when instructions stored in the computer readable storage medium are executed, the air conditioner executes the control method of the air conditioner, so that when the indoor machine temperature sensor has a fault, the air conditioner can acquire a substitute value of the indoor environment temperature while issuing a fault alarm, ensuring that the indoor air conditioner maintains subsequent operation and improving the user experience.

In order to achieve above objectives, an embodiment of the third aspect of the present disclosure proposes a control apparatus of an air conditioner. The air conditioner detects an indoor environment temperature by an indoor temperature sensor, and the control apparatus includes: a first determining module, configured to determine whether the indoor temperature sensor has a fault when the air conditioner is in operation; a first control module, configured to control the air conditioner to send indoor temperature sensor fault alarm information when the indoor temperature sensor has a fault; a second determining module, configured to determine whether an indoor machine of the air conditioner is connected to a control terminal when the indoor temperature sensor has a fault; and a second control module, configured to acquire current indoor environment temperature by the control terminal when the indoor machine is connected to only one control terminal, and control the air conditioner by using the current indoor environment temperature acquired by the control terminal as a control parameter, to keep the air conditioner operating continuously.

According to the control apparatus of an air conditioner according to an embodiment of the present disclosure, during the operation of the air conditioner, the air conditioner detects the indoor environment temperature by the indoor temperature sensor, and first determines whether the indoor temperature sensor has a fault through the first determining module, and controls the air conditioner to send indoor temperature sensor fault alarm information through the first control module when the indoor temperature sensor has a fault, and when the indoor temperature sensor has a fault, further determines, through the second determining module, whether the indoor machine of the air conditioner is connected to a control terminal, and in turn, when the indoor machine is connected to only one control terminal, the second control module acquires current indoor environment temperature by the control terminal, and controls the air conditioner by taking the current indoor environment temperature acquired by the control terminal as a control parameter to keep the air conditioner operating continuously. Therefore, when the indoor machine temperature sensor has a fault, the air conditioner can acquire a substitute value of the indoor environment temperature while issuing a fault alarm, ensuring that the air conditioner maintains the subsequent operation and improving the user experience.

According to an embodiment of the present disclosure, when the indoor machine is connected to multiple control terminals, the second control module is further configured to acquire current indoor environment temperature by each control terminal, and use the current indoor environment temperature acquired by one of the multiple control terminals as the control parameter according to a priority order of each control terminal.

According to an embodiment of the present disclosure, when the indoor machine is connected to multiple control terminals, the second control module is further configured to acquire current indoor environment temperature by each control terminal, acquire a weight of each control terminal, and acquire the control parameter according to the current indoor environment temperature acquired by each control terminal and the weight of the corresponding control terminal.

According to an embodiment of the present disclosure, the first determining module includes: an acquiring unit, configured to acquire indoor environment temperature detected by the indoor temperature sensor every preset period, and acquire maximum and minimum values of the indoor environment temperature within N preset periods, wherein N is an integer greater than or equal to 2; a determining unit, configured to determine whether a difference between the maximum value and the minimum value is greater than or equal to a preset temperature difference, and determine that the indoor temperature sensor has a fault when the difference between the maximum value and the minimum value is greater than or equal to the preset temperature difference.

According to an embodiment of the present disclosure, after the second control module controls the air conditioner to continuously operate with the control parameter for a first preset time, the first determining module is further configured to continue to determine whether the indoor temperature sensor has a fault.

In order to achieve above objectives, an embodiment of the fourth aspect of the present disclosure proposes an air conditioner including said control apparatus of the air conditioner.

According to the air conditioner proposed by the embodiment of the present disclosure, with the control apparatus of the air conditioner, when the indoor machine temperature sensor has a fault, the air conditioner can acquire a substitute value of the indoor environment temperature while issuing a fault alarm, ensuring that the air conditioner maintains subsequent operation and improving the user experience.

### DRAWINGS

Figure 1 is a flow chart of a control method of an air conditioner according to an embodiment of the present disclosure;
Figure 2 is a flow chart of a control method of an air conditioner according to an embodiment of the present disclosure;
Figure 3 is a flow chart of a control method of an air conditioner according to a specific embodiment of the present disclosure;
Figure 4 is a schematic block diagram of a control apparatus of an air conditioner according to an embodiment of the present disclosure; and
Figure 5 is a schematic block diagram of an air conditioner according to an embodiment of the present disclosure.

### DETAILED DESCRIPTION

The embodiments of the present disclosure are described in detail below, and the examples of the embodiments are illustrated in the drawings, wherein throughout this specification, the same or similar reference numerals are used to refer to the same or similar elements or elements having the same or similar functions. The embodiments described below with reference to the drawings are exemplary, intended to be illustrative and is not to be construed as limiting to the present disclosure.

A computer readable storage medium, an air conditioner, and a control method and apparatus thereof proposed by the embodiments of the present disclosure are described below in connection with the accompanying drawings.

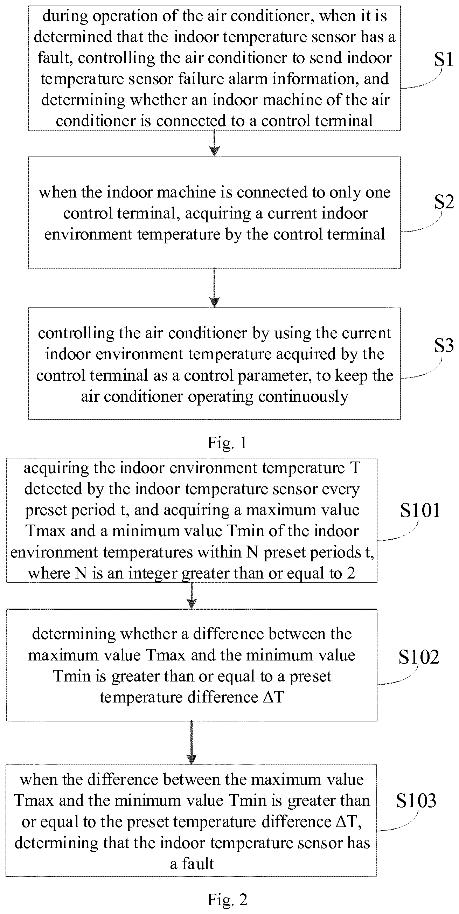

Figure 1 is a flow chart of a control method of an air conditioner according to an embodiment of the present disclosure. An indoor environment temperature is detected by an indoor temperature sensor. As illustrated in Figure 1, the control method includes following steps:
At S1, during operation of the air conditioner, when it is determined that the indoor temperature sensor has a fault, the air conditioner is controlled to send indoor temperature sensor failure alarm information, and it is determined whether an indoor machine of the air conditioner is connected to a control terminal.

The control terminal may include a remote controller, a wire controller or other controller such as a mobile phone, a tablet computer or the like.

According to an embodiment of the present disclosure, as illustrated in Figure 2, whether the indoor temperature sensor has a fault may be determined as follows.

At S101, the indoor environment temperature T detected by the indoor temperature sensor is acquired every preset period t, and a maximum value Tmax and a minimum value Tmin of the indoor environment temperatures with N preset periods t is acquired, where N is an integer greater than or equal to 2.

The preset period t is pre-stored in the air conditioner in advance.

That is, the indoor environment temperature T is acquired by the indoor temperature sensor every preset period t, and N indoor environment temperatures within N preset periods t are acquired, in which the highest indoor environment temperature among the N indoor environment temperatures is recorded as Tmax, i.e. the maximum value of the indoor environment temperatures, and the lowest indoor environment temperature among the N indoor environment temperatures is recorded as Tmin, i.e. the minimum value of the indoor environment temperatures.

At S102, it is determined whether a difference between the maximum value Tmax and the minimum value Tmin is greater than or equal to a preset temperature difference Δ T.

The preset temperature difference Δ T is pre-stored in the air conditioner in advance.

At S103, when the difference between the maximum value Tmax and the minimum value Tmin is greater than or equal to the preset temperature difference Δ T, it is determined that the indoor temperature sensor has a fault.

In other embodiments of the present disclosure, whether the indoor temperature sensor has a fault may be detected through other fault detection methods and a fault detection signal is generated when it is determined that the fault occurs.

Thus, after determining that the indoor temperature sensor has a fault, for example, Tmax-Tmin ≥ Δ T or after receiving the failure detection signal, the air conditioner is controlled to send indoor temperature sensor failure alarm information, and it is determined whether the indoor machine of the air conditioner is connected to a control terminal.

At S2, when the indoor machine is connected to only one control terminal, a current indoor environment temperature is acquired by the control terminal.

That is, after controlling the air conditioner to send the indoor temperature sensor failure alarm information, it is determined whether the indoor machine of the air conditioner is connected to a control terminal, and when the indoor machine is connected to only one control terminal, for example, a remote controller, a wire controller or other controller, the current indoor environment temperature is acquired by the remote controller, the wire controller or the other controller.

The indoor environment temperature detected by the remote controller is Trc, the indoor environment temperature detected by the wire controller is Twc, and the indoor environment temperature detected by other controller is Toc.

At S3, the air conditioner is controlled by using the current indoor environment temperature acquired by the control terminal as a control parameter, to keep the air conditioner operating continuously.

That is, when it is determined that the indoor temperature sensor has a fault, the indoor environment temperature Trc detected by the remote controller, the air conditioner is also controlled by using the indoor environment temperature Twc detected by the remote controller, or the indoor environment temperature Toc detected by other controller as a control parameter, while the air conditioner is controlled to send the indoor temperature sensor failure alarm information. That is, when the indoor machine is only connected to the remote controller, Trc is used as the control parameter; when the indoor machine is only connected to the wire controller, Twc is used as the control parameter; when the indoor machine is only connected to other controller, Toc is used as the control parameter, i.e. let T=Trc, T=Twc or T=Toc, so that the current indoor environment temperature is re-assigned a value to control the air conditioner to continue operating with the re-assigned current indoor environment temperature.

According to an embodiment of the present disclosure, when the indoor machine is connected to multiple control terminals, the current indoor environment temperature is acquired by each control terminal, and the current indoor environment temperature acquired by one of the multiple control terminals is used as the control parameter according to a priority order of each control terminal.

The priority order of each control terminal may be customized or may be a default value.

That is, after the air conditioner is controlled to send the indoor temperature sensor failure alarm information, it is determined whether the indoor machine of the air conditioner is connected to a control terminal. When the indoor machine of the air conditioner is connected to two or more of the remote controller, the wire controller or other controller, it is necessary to acquire the indoor environment temperature parameter in accordance with the priority order of the control terminal. As an example, it is customized that a priority of the remote controller is higher than that of the wire controller and is higher than that of other controller. That is, when the indoor machine is connected to two or more of the wire controller, the remote controller and other controllers at the same time, the indoor environment temperature Trc detected by the remote controller with the highest priority can be used as the control parameter according to the customized priority order, thereby re-assigning a value for the current indoor environment temperature, i.e., let T = Trc.

According to an embodiment of the present disclosure, when the indoor machine is connected to multiple control terminals, the current indoor environment temperature is acquired by each control terminal, a weight of each control terminal is acquired, and the control parameter is acquired according to the current indoor environment temperature acquired by each control terminal and the weight of the corresponding control terminal.

Let the weight value of Trc collected by the remote controller be a, the weight value of Twc collected by the wire controller be b, or the weight value of Toc collected by other controller be c, the control parameter can be acquired according to the formula of T=a^{∗}Trc+b^{∗}Twc+c^{∗}Toc.

That is to, after the air conditioner is controlled to send the indoor temperature sensor failure alarm information, it is determined whether the indoor machine of the air conditioner is connected to a control terminal. When the indoor air conditioner is connected to two or more of the remote controller, the wire controller and other controllers, let T=a^{∗}Trc+b^{∗}Twc+c^{∗}Toc, where a+b+c=1, and if there is no numeric value for such term, the corresponding weight thereof is 0.

According to an embodiment of the present disclosure, after the air conditioner is controlled to continuously operate with the control parameter for a first preset time mT, determining whether the indoor temperature sensor has a fault is continued.

The first preset time mT may be pre-stored in the air conditioner in advance.

That is, after the air conditioner is controlled to continuously operate with the control parameter acquired by the control terminal such as the remote controller, the wire controller or other controller for first preset time mT, determining whether the indoor temperature sensor has a fault is continued, that is, step S1 is returned to.

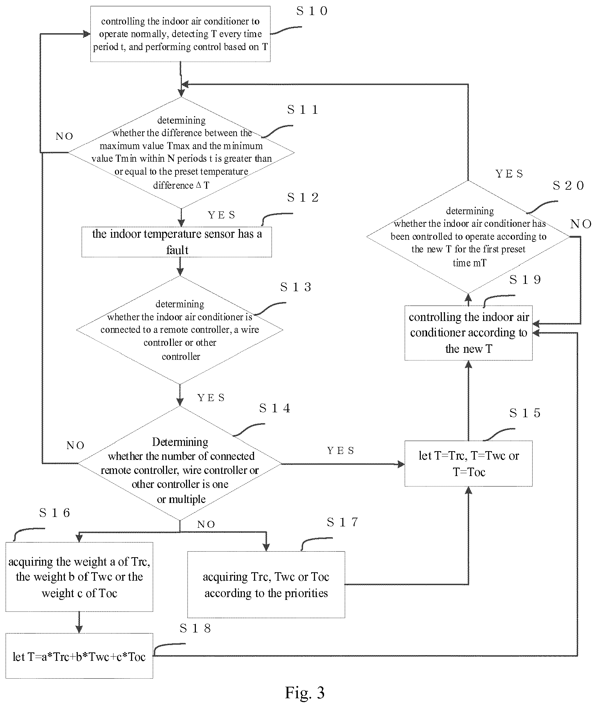

According to a specific embodiment of the present disclosure, as illustrated in Figure 3, a control method of an air conditioner includes following steps:
At S10, the indoor air conditioner is controlled to operate normally, T is detected every time period t, and corresponding control is performed based on T.
At S11, it is determined whether the difference between the maximum value Tmax and the minimum value Tmin within N periods t is greater than or equal to the preset temperature difference Δ T.

If yes, step S12 is performed; if no, step S10 is returned to.

At S12, it is determined that the indoor temperature sensor has a fault.

At S13, it is determine whether the indoor air conditioner is connected to a remote controller, a wire controller or other controller.

If yes, step S14 is performed; if no, step S10 is returned to.

At S14, it is determined whether the number of connected remote controller, wire controller or other controller is one or multiple.

If it is one, step S15 is performed; if it is more than one, step S16 or S17 is performed.

At S15, let T=Trc, T=Twc or T=Toc, and then step S19 is performed.

At S16, the weight a of Trc, the weight b of Twc or the weight c of Toc is acquired, and then step S18 is performed.

At S17, Trc, Twc or Toc is acquired according to the priorities, and then step S15 is performed.

At S18, let T=a^{∗}Trc+b^{∗}Twc+c^{∗}Toc.

At S19, the indoor air conditioner is controlled according to the new T.

At S20, it is determined whether the indoor air conditioner has been controlled to operate according to the new T for the first preset time mT.

If yes, step S11 is returned to; if no, step S19 is returned to.

In summary, according to the control method of the air conditioner proposed by the embodiment of the present disclosure, during the operation of the air conditioner, the indoor environment temperature is detected by the indoor temperature sensor, and when it is determined that the indoor temperature sensor has a fault, the air conditioner is controlled to send the indoor temperature sensor failure alarm information, and it is further determined whether the indoor machine of the air conditioner is connected to a control terminal, and when the indoor machine is connected to only one control terminal, the current indoor environment temperature is acquired by the control terminal, and the air conditioner is controlled by using the current indoor environment temperature acquired by the control terminal as the control parameter, to keep the air conditioner operating continuously. Therefore, when the indoor temperature sensor has a fault, the air conditioner can acquire a substitute value of the indoor environment temperature while issuing a fault alarm, ensuring that the air conditioner maintains subsequent operation and improving the user experience.

Further, the present disclosure also proposes a computer readable storage medium having instructions stored therein for executing a control method of an air conditioner. When the instructions are executed, the air conditioner executes the control method of the air conditioner according to the foregoing embodiment.

In summary, according to the computer readable storage medium proposed by the embodiment of the present disclosure, when the instructions stored therein are executed, the air conditioner executes the control method of the air conditioner, so that when the indoor temperature sensor has a fault, the air conditioner can acquire a substitute value of the indoor environment temperature while issing a fault alarm, ensuring that the indoor air conditioner maintains subsequent operation and improving the user experience.

Figure 3 is a schematic block diagram of a control apparatus of an air conditioner according to an embodiment of the present disclosure. As illustrated in Figure 3, the control apparatus 100 of the air conditioner includes a first determining module 10, a first control module 20, a second determining module 30, and a second control module 40.

The first determining module 10 is configured to determine whether the indoor temperature sensor has a fault when the air conditioner is in operation. The first control module 20 is configured to control the air conditioner to send indoor temperature sensor fault alarm information when the indoor temperature sensor has a fault. The second determining module 30 is configured to determine whether the indoor machine of the air conditioner is connected to a control terminal when the indoor temperature sensor has a fault. The second control module 40 is configured to acquire current indoor environment temperature by the control terminal when the indoor machine is connected to only one control terminal, and control the air conditioner by using the current indoor environment temperature acquired by the control terminal as a control parameter, to keep the air conditioner operating continuously.

The control terminal may include a remote controller, a wire controller or other controller such as a mobile phone, a tablet computer or the like.

That is, during the operation of the air conditioner, the first determining module 10 may determine whether the indoor temperature sensor has a fault.

According to an embodiment of the present disclosure, the first determining module 10 includes: an acquiring unit 50 and a determining unit 60.

The acquiring unit 50 is configured to acquire the indoor environment temperature detected by the indoor temperature sensor every preset period t, and acquire N indoor environment temperatures within N preset periods t, in which the highest indoor environment temperature among the N indoor environment temperatures is denoted as Tmax, i.e. the maximum value of indoor environment temperature, and the lowest indoor environment temperature among the N indoor environment temperatures is recorded as Tmin, i.e. the minimum value of indoor environment temperature, where N is an integer greater than or equal to 2. The determining unit 60 is configured to determine whether the difference between the maximum value Tmax and the minimum value Tmin is greater than or equal to the preset temperature difference Δ T, and determine that the indoor temperature sensor has a fault when the difference between the maximum value Tmax and the minimum value Tmin is greater than or equal to the preset temperature difference Δ T.

In other embodiments of the present disclosure, whether the indoor temperature sensor has a fault may be detected through other fault detection methods and a fault detection signal is generated when it is determined that the fault occurs.

Thus, after determining that the indoor temperature sensor has a fault, for example, Tmax-Tmin ≥ Δ T or after receiving the failure detection signal, the air conditioner is controlled to send the indoor temperature sensor failure alarm information, and it is determined whether the indoor machine of the air conditioner is connected to a control terminal.

The preset period t and the preset temperature difference Δ T are pre-stored in the air conditioner in advance.

That is, the acquiring unit 50 acquires the indoor environment temperature T by the indoor temperature sensor every preset period t, and acquires N indoor environment temperatures within N preset periods t, wherein the highest indoor environment temperature among the N indoor environment temperatures is recorded as Tmax, i.e. the maximum value of indoor environment temperature, and the lowest indoor environment temperature among the N indoor environment temperatures is recorded as Tmin, i.e. the minimum value of indoor environment temperature. When the determining unit 60 determines that the difference between the maximum value Tmax and the minimum value Tmin is greater than or equal to the preset temperature difference Δ T, it is determined that the indoor temperature sensor has a fault; when the determining unit 60 determines that the difference between the maximum value Tmax and the minimum value Tmin is less than the preset temperature difference Δ T, it is determined that the indoor temperature sensor does not have a fault.

Moreover, when the first determining module 10 determines that the indoor temperature sensor has a fault, the first control module 20 controls the air conditioner to send indoor temperature sensor fault alarm information. When the indoor temperature sensor has a fault, the second determining module 30 determines whether the indoor machine of the air conditioner is connected to a control terminal, and when the indoor machine is connected to only one control terminal, the second control module 40 acquires current indoor environment temperature by the control terminal, and controls the air conditioner by using the current indoor environment temperature acquired by the control terminal as a control parameter, to keep the air conditioner operating continuously. Therefore, when the indoor machine temperature sensor has a fault, the air conditioner can acquire a substitute value of the indoor environment temperature while issuing a fault alarm, ensuring that the air conditioner maintains subsequent operation and improving the user experience.

It should be noted that the control terminal may include a remote controller, a wire controller or other controller. When the second determining module 30 determines that the indoor machine is connected to only one control terminal, such as a remote controller, a wire controller or other controller, the current indoor environment temperature is acquired by the remote controller, the wire controller or the other controller.

That is, after determining that the indoor temperature sensor has a fault, for example, Tmax-Tmin ≥ Δ T or after receiving the fault detection signal, the air conditioner is also controlled by using the indoor environment temperature Trc detected by the remote controller, the indoor environment temperature Twc detected by the remote controller, or the indoor environment temperature Toc detected by other controller as a control parameter, while the air conditioner is controlled to send the indoor temperature sensor failure alarm information. That is, when the indoor machine is only connected to the remote controller, Trc is used as the control parameter; when the indoor machine is only connected to the wire controller, Twc is used as the control parameter; when the indoor machine is only connected to other controller, Toc is used as the control parameter, i.e. let T=Trc, T=Twc or T=Toc, so that the current indoor environment temperature is re-assigned a value to control the air conditioner to continue to operate with the re-assigned current indoor environment temperature.

According to an embodiment of the present disclosure, when the indoor machine is connected to multiple control terminals, the second control module 40 is further configured to acquire the current indoor environment temperature by each control terminal, and use the current indoor environment temperature acquired by one of the multiple control terminals as the control parameter according to a priority order of each control terminal.

The priority order of each control terminal can be customized or can be a default value.

That is, after the air conditioner is controlled to send the indoor temperature sensor failure alarm information, it is determined whether the indoor machine of the air conditioner is connected to a control terminal, and when the indoor air conditioner is connected to two or more of the remote controller, the wire controller and the other controller, it is required to acquire the indoor environment temperature parameter in accordance with the priority order of the control terminal. As an example, it is customized that the priority of the remote controller is higher than that of the wire controller and is higher than that of other controller. That is, when the indoor machine is connected to two or more of the wire controller and the remote controller and other controllers at the same time, the indoor environment temperature Trc detected by the remote controller with the highest priority can be used as a control parameter according to the customized priority order, thereby re-assigning a value for the current indoor environment temperature, i.e., letting T = Trc, and enabling the air conditioner to operate at the new indoor environment temperature.

According to an embodiment of the present disclosure, when the indoor machine is connected to multiple control terminals, the second control module 40 is further configured to acquire the current indoor environment temperature by each control terminal, and acquire the weight of each control terminal, and acquire the control parameter according to the current indoor environment temperature acquired by each control terminal and the weight of the corresponding control terminal.

The second control module 40 may let the weight value of Trc collected by the remote controller be a, the weight value of Twc collected by the wire controller be b, or the weight value of Toc collected by other controller be c, then the control parameter can be acquired according to the formula of T=a^{∗}Trc+b^{∗}Twc+c^{∗}Toc.

That is, after the air conditioner is controlled to send the indoor temperature sensor failure alarm information, it is determined whether the indoor machine of the air conditioner is connected to a control terminal, and when the second determining module 30 determines that the indoor air conditioner is connected to two or more of the remote controller, the wire controller and other controllers, let T=a^{∗}Trc+b^{∗}Twc+c^{∗}Toc, where a+b+c=1, and if there is no numeric value for such term, the corresponding weight thereof is 0.

According to an embodiment of the present disclosure, after the second control module 40 controls the air conditioner to continuously operate with the control parameter for a first preset time mT, the first determining module 10 further continues to determine whether the indoor temperature sensor has a fault.

That is, after the second control module 40 controls the air conditioner to continuously operate the with the control parameter acquired by the control terminal such as the remote controller, the wire controller or the other controller for the first preset time mT, determining whether the indoor temperature sensor has a fault is continued.

In summary, with the control apparatus of the air conditioner according to an embodiment of the present disclosure, during the operation of the air conditioner, the air conditioner detects the indoor environment temperature by the indoor temperature sensor, and first determines whether the indoor temperature sensor has a fault through the first determining module, and controls the air conditioner to send indoor temperature sensor fault alarm information through the first control module when the indoor temperature sensor has a fault, and when the indoor temperature sensor has a fault, further determines, through the second determining module, whether the indoor machine of the air conditioner is connected to a control terminal, and in turn, when the indoor machine is connected to only one control terminal, the second control module acquires current indoor environment temperature by the control terminal, and controls the air conditioner by taking the current indoor environment temperature acquired by the control terminal as a control parameter to keep the air conditioner operating continuously. Therefore, when the indoor machine temperature sensor has a fault, the air conditioner can acquire a substitute value of the indoor environment temperature while issuing a fault alarm, ensuring that the air conditioner maintains the subsequent operation and improving the user experience.

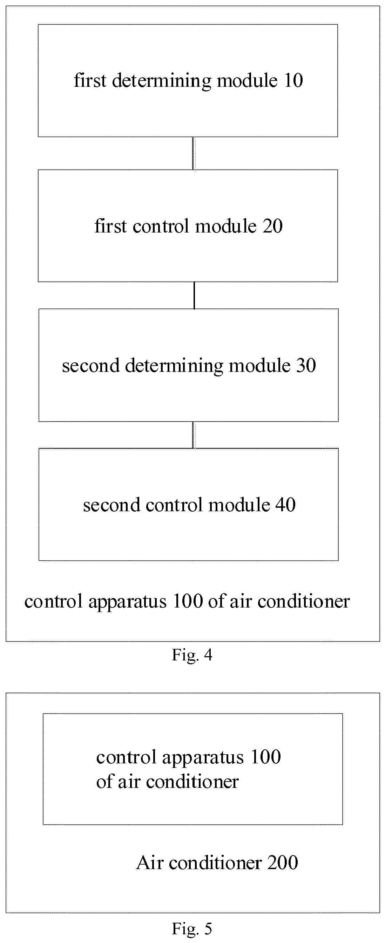

Figure 4 is a schematic block diagram of an air conditioner according to an embodiment of the present disclosure. As illustrated in Figure 4, the air conditioner 200 includes a control apparatus 100 for an air conditioner.

In summary, according to the air conditioner proposed by an embodiment of the present disclosure, with the control apparatus of the air conditioner, when the indoor machine temperature sensor has a fault, the air conditioner can acquire a substitute value of the indoor environment temperature while issuing a fault alarm, ensuring that the air conditioner maintains subsequent operation and improving the user experience.

In the description of the present disclosure, it is to be understood that the orientations or positional relationships indicated by terms 'center', 'longitudinal', 'transverse', 'length', 'width', 'thickness', 'upper', 'lower', 'front', 'rear', 'left', 'right', 'vertical', 'horizontal', 'top', 'bottom', 'inside', 'outside', 'clockwise', 'counterclockwise', 'axial', 'radial', 'circumferential' and the like are based on the orientations or positional relationships shown in the drawings, and is merely for convenience of description of the present disclosure and simplification of the description, and does not indicate or imply the indicated apparatuses or components must have a particular orientation, be constructed and operated in particular orientation, and thus is not to be construed as limiting the disclosure.

Moreover, the terms 'first' and 'second' are used for descriptive purposes only and are not to be construed as indicating or implying a relative importance or implicitly indicating the number of technical features indicated. Thus, features defined with 'first' or 'second' may include at least one of the features, either explicitly or implicitly. In the description of the present disclosure, 'a plurality of' means at least two, such as two, three, etc., unless specifically defined otherwise.

In the present disclosure, unless explicitly stated and defined otherwise, the terms 'installed', 'connected with', 'connected to', 'fixed' and the like shall be understood in a broader sense, for example, it can be either a fixed connection or a detachable connection, or integrated to be a unity; it can be mechanical or electrical connection; it can be directly connected, or indirectly connected through an intermediate medium, can be the internal communication of two elements or the interaction of two elements, unless explicitly defined otherwise. For those ordinary skilled in the art, the specific meanings of the above terms in the present disclosure can be understood on a case-by-case basis.

In the present disclosure, unless explicitly stated and defined otherwise, the first feature 'on' or 'under' the second feature may be a direct contact of the first and second features, or the first and second features may be indirectly contact through an intermediate medium. Moreover, the first feature 'over', 'above' and 'on' the second feature may be that the first feature is directly above or obliquely above the second feature, or merely means that the horizontal level of the first feature is higher than that of the second feature. The first feature 'under', 'below' and 'underneath' the second feature may be that the first feature is directly below or obliquely below the second feature, or merely means that the horizontal level of the first feature is less than that of the second feature.

In the description of the present specification, the description with reference to the terms 'an embodiment', 'some embodiments', 'example', 'specific example', or 'some examples' and the like means a specific feature, structure, material or characteristic described in connection with the embodiment or example is included in at least an embodiment or example of the disclosure. In the present specification, the schematic representation of the above terms is not necessarily directed to the same embodiment or example. Furthermore, the specific features, structures, materials, or characteristics described may be combined in a suitable manner in any one or more embodiments or examples. In addition, various embodiments or examples described in the specification, as well as features of various embodiments or examples, may be incorporated and combined by those skilled in the art.

Although the embodiments of the present disclosure have been shown and described above, it is understood that the above described embodiments are illustrative and are not to be construed as limiting the disclosure. Variations, modifications, substitutions and alternations of the above described embodiments may be made by those ordinary skilled in the art within the scope of the disclosure.

## Claims

1. A control method of an air conditioner, wherein, an indoor environment temperature is detected by an indoor temperature sensor, and the control method comprising steps of:
during operation of the air conditioner, when it is determined that the indoor temperature sensor has a fault, controlling the air conditioner to send indoor temperature sensor failure alarm information, and determining whether an indoor machine of the air conditioner is connected to a control terminal;
when the indoor machine is connected to only one control terminal, acquiring a current indoor environment temperature by the control terminal; and
controlling the air conditioner by using the current indoor environment temperature acquired by the control terminal as a control parameter, to keep the air conditioner operating continuously.

2. The control method according to claim 1, wherein, when the indoor machine is connected to multiple control terminals, the current indoor environment temperature is acquired by each control terminal, and the current indoor environment temperature acquired by one of the multiple control terminals is used as the control parameter according to a priority order of each control terminals.

3. The control method according to claim 1, wherein, when the indoor machine is connected to multiple control terminals, the current indoor environment temperature is acquired by each control terminal, a weight of each control terminal is acquired, and the control parameter is acquired according to the current indoor environment temperature acquired by each control terminal and the weight of the corresponding control terminal.

4. The control method according to any of claims 1-3, wherein, determining that the indoor temperature sensor has a fault comprises:
acquiring the indoor environment temperature detected by the indoor temperature sensor every preset period, and acquiring maximum and minimum values of the indoor environment temperatures within N preset periods, where N is an integer greater than or equal to 2;
determining whether a difference between the maximum value and the minimum value is greater than or equal to a preset temperature difference;
when the difference between the maximum value and the minimum value is greater than or equal to the preset temperature difference, determining that the indoor temperature sensor has a fault.

5. The control method according to any of claims 1-3, further comprising:
after controlling the air conditioner to continuously operate with the control parameter for a first preset time, continuing to determine whether the indoor temperature sensor has a fault.

6. A computer readable storage medium having instructions stored therein, which when executed, cause an air conditioner to execute the control method of the air conditioner according to any of claims 1-5.

7. A control apparatus of an air conditioner, wherein, the air conditioner is configured to detect an indoor environment temperature by an indoor temperature sensor, and the control apparatus comprises:
a first determining module, configured to determine whether the indoor temperature sensor has a fault when the air conditioner is in operation;
a first control module, configured to control the air conditioner to send indoor temperature sensor fault alarm information when the indoor temperature sensor has a fault;
a second determining module, configured to determine whether an indoor machine of the air conditioner is connected to a control terminal when the indoor temperature sensor has a fault;
a second control module, configured to acquire current indoor environment temperature by the control terminal when the indoor machine is connected to only one control terminal, and control the air conditioner by using the current indoor environment temperature acquired by the control terminal as a control parameter to keep the air conditioner operating continuously.

8. The control apparatus according to claim 7, wherein, when the indoor machine is connected to multiple control terminals, the second control module is further configured to acquire current indoor environment temperature by each control terminal, and use the current indoor environment temperature acquired by one of the multiple control terminals as the control parameter according to a priority order of each control terminals.

9. The control apparatus according to claim 7, **characterized in that**, when the indoor machine is connected to multiple control terminals, the second control module is further configured to acquire current indoor environment temperature by each control terminal, acquire a weight of each control terminal, and acquire the control parameter according to the current indoor environment temperature acquired by each control terminal and the weight of the corresponding control terminal.

10. The control apparatus according to any of claims 7-9, wherein, the first determining module comprises:
an acquiring unit, configured to acquire indoor environment temperature detected by the indoor temperature sensor every preset period, and acquire maximum and minimum values of the indoor environment temperatures within N preset periods, wherein N is an integer greater than or equal to 2;
a determining unit, configured to determine whether a difference between the maximum value and the minimum value is greater than or equal to a preset temperature difference, and determine that the indoor temperature sensor has a fault when the difference between the maximum value and the minimum value is greater than or equal to the preset temperature difference.

11. The control apparatus according to any of claims 7-9, wherein, after the second control module controls the air conditioner to continuously operate with the control parameter for a first preset time, the first determining module is further configured to continue to determine whether the indoor temperature sensor has a fault.

12. An air conditioner, comprising the control apparatus of an air conditioner according to any of claims 7-11.
